(19)

**Europäisches Patentamt**
**European Patent Office**
**Office européen des brevets**

(11)   **EP 2 149 394 A1**

(12)   **EUROPEAN PATENT APPLICATION**

(43) Date of publication:
**03.02.2010 Bulletin 2010/05**

(51) Int Cl.:
***A63F 13/10*** (2006.01)

(21) Application number: **09166560.4**

(22) Date of filing: **28.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **28.07.2008  JP 2008194224**

(71) Applicant: **NAMCO BANDAI Games Inc.**
**Shinagawa-ku**
**Tokyo 140-8590 (JP)**

(72) Inventors:
• **Kumakura, Takashi**
  **Shinagawa-ku,  Tokyo 140-8590 (JP)**
• **Nimura, Shinobu**
  **Shinagawa-ku,  Tokyo 140-8590 (JP)**

(74) Representative: **Emerson, Peter James et al**
**Page Hargrave**
**Whitefriars**
**Lewins Mead**
**Bristol BS1 2NT (GB)**

(54)   **Image generation device and image generation method.**

(57)   An image generation device storing a plurality of items of attribute information respectively associated with a plurality of part objects that form a model object in a storage section, and performing a hit effect process based on the attribute information of a part object among the plurality of part objects that corresponds to a hit position of the model object.

FIG. 1

**Description**

BACKGROUND OF THE INVENTION

The present invention relates to an image generation device and an image generation method.

An image generation device (game device) that generates an image viewed from a virtual camera (given viewpoint) in an object space (virtual three-dimensional space) has been known. Such an image generation device is very popular as a system that allows experience of virtual reality.

An image generation device that performs a hit effect process when the image generation device has determined that a character has attacked and hit another character has been disclosed (JP-A-2006-268406). However, since such a hit effect process merely throws off sparks from the hit position, the damage to the attacked character cannot be realistically rendered.

SUMMARY

According to a first aspect of the invention, there is provided an image generation device comprising:

a storage section that stores a plurality of part objects that form a model object;
a hit determination section that determines whether or not an object has hit the model object; and
a hit effect processing section that performs a hit effect process under a predetermined condition when the hit determination section has determined that the object has hit the model object,
the storage section storing a plurality of items of attribute information respectively associated with the plurality of part objects; and
the hit effect processing section performing the hit effect process based on the attribute information of a part object among the plurality of part objects that corresponds to a hit position of the model object.

According to a second aspect of the invention, there is provided an image generation method comprising:

storing a plurality of part objects that form a model object in a storage section;
determining whether or not an object has hit the model object;
performing a hit effect process under a predetermined condition when the model object has been determined to have been hit by the object;
storing a plurality of items of attribute information respectively associated with the plurality of part objects; and
performing the hit effect process based on the attribute information of a part object among the plurality of part objects that corresponds to a hit position of the model object.

BRIEF DESCRIPTION OF THE SEVERAL VIEWS OF THE DRAWING

FIG. 1 is a functional block diagram of an image generation device according to one embodiment of the invention.
FIG. 2 is a diagram illustrating a slot.
FIG. 3 is a diagram illustrating a slot.
FIG. 4 illustrates a table illustrating the relationship among a category, a part object, and the like.
FIG. 5 illustrates an example of a part object selection screen according to one embodiment of the invention.
FIG. 6 illustrates an example of a part object color selection screen.
FIG. 7 illustrates an example of a model object body information setting screen.
FIG. 8 illustrates an example of a model object.
FIG. 9 is a table illustrating an example of the attribute of a part object.
FIGS. 10A to 10C illustrates a hit effect process.
FIGS. 11A and 11B illustrate examples of an effect object.
FIG. 12 is a flowchart illustrating an example of a process according to one embodiment of the invention.

DETAILED DESCRIPTION OF THE EMBODIMENT

The invention may provide an image generation device and an image generation method that implement a hit effect process that can realistically represent damage to a model object by a simple process.

(1) According to one embodiment of the invention, there is provided an image generation device comprising:

a storage section that stores a plurality of part objects that form a model object;

a hit determination section that determines whether or not an object has hit the model object; and

a hit effect processing section that performs a hit effect process under a predetermined condition when the hit determination section has determined that the object has hit the model object,

the storage section storing a plurality of items of attribute information respectively associated with the plurality of part objects; and

the hit effect processing section performing the hit effect process based on the attribute information of a part object among the plurality of part objects that corresponds to a hit position of the model object.

According to the above embodiment, since the hit effect process is performed based on the attribute information of the part object corresponding to the hit position of the model object, a situation in which the part object of the model object is destroyed can be represented (displayed). Specifically, damage to the model object can be realistically represented by a simple process.

(2) In the above image generation device,

the storage section may store a plurality of items of material information as the attribute information respectively associated with the plurality of part objects; and

the hit effect processing section may select an effect object from a plurality of effect objects based on the material information of the part object corresponding to the hit position of the model object, and may perform the hit effect process using the selected effect object.

According to the above embodiment, since the material of the part object can be reflected in the effect objects, the player gets an impression that the effect objects are fragments of the part object.

(3) In the above image generation device,

the storage section may store a plurality of items of color information as the attribute information respectively associated with the plurality of part objects; and

the hit effect processing section may determine a color of an effect object based on the color information of the part object corresponding to the hit position of the model object, and may perform the hit effect process using an effect object of the determined color.

According to the above embodiment, since the color of the part object can be reflected in the color of the effect objects, the player gets an impression that the effect objects are fragments of the part object.

(4) In the above image generation device,

the storage section may store the color information that includes color arrangement information of the part object; and

the hit effect processing section may determine the color of the effect object and the number of effect objects of the determined color based on the color arrangement information of the part object corresponding to the hit position of the model object.

According to the above embodiment, since the color of the effect objects and the number of effect objects of each color can be determined based on the color arrangement information of the part object, the color of the fragments of the destroyed part object and the number of fragments can be represented realistically.

(5) In the above image generation device,

the hit effect processing section may determine the number of effect objects based on a size of the part object corresponding to the hit position of the model object.

According to the above embodiment, the size of the part object can be reflected in the number of effect objects.

(6) In the above image generation device,

when two or more part objects among the plurality of part objects are associated with the hit position of the model object, the hit effect processing section may perform the hit effect process on each of the two or more part objects based on the attribute information of each of the two or more part objects.

According to the above embodiment, since the hit effect process based on the attribute information is performed on each part object, the player gets a clear impression that the part object has been destroyed.

(7) According to one embodiment of the invention, there is provided an image generation method comprising:

storing a plurality of part objects that form a model object in a storage section;

determining whether or not an object has hit the model object;

performing a hit effect process under a predetermined condition when the model object has been determined to have been hit by the object;

storing a plurality of items of attribute information respectively associated with the plurality of part objects; and

performing the hit effect process based on the attribute information of a part object among the plurality of part objects that corresponds to a hit position of the model object.

Embodiments of the invention will now be described below. Note that the embodiments described below do not unduly limit the scope of the invention as stated in the claims. Also, not all the elements described below should be taken as essential requirements of the invention.

1. Configuration

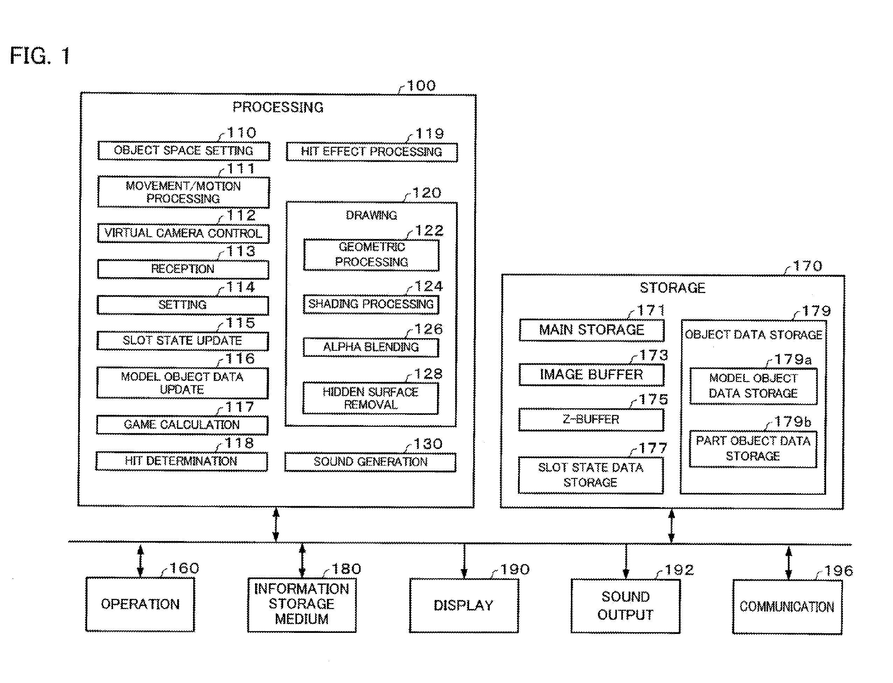

FIG. 1 is an example of a functional block diagram of an image generation device (game device or terminal) according to one embodiment of the invention. Note that the image generation device according to this embodiment may have a configuration in which some of the elements (sections) in FIG. 1 are omitted.

An operation section 160 allows the player (operator) to input operation data of a player's object (i.e., a model object operated by the player). The function of the operation section 160 may be implemented by a lever, a button, a steering wheel, a microphone, a touch panel display, a casing, or the like.

A storage section 170 serves as a work area for a processing section 100, a communication section 196, and the like. The function of the storage section 170 may be implemented by a RAM (VRAM) or the like.

A slot state data storage section 177 stores slot state data. The term "slot state data" refers to data that specifies the presence or absence of part object data in each slot and the type of part object data disposed in each slot. Each part object is formed by one or more pieces of part object data. Each piece of part object data is associated with one of the slots. Specifically, the slot state data is information for managing the part object data disposed corresponding to each slot (i.e., in slot units).

An object data storage section 179 stores object data. The object data storage section 179 according to this embodiment includes a model object data storage section 179a and a part object data storage section 179b.

The model object data storage section 179a stores model object data. The model object data storage section 179a according to this embodiment includes a plurality of buffers in order to store a plurality of model objects, and stores the model object data in each buffer.

The part object data storage section 179b stores a plurality of part objects. Each of the part objects is classified into one of a plurality of categories and stored in the part object data storage section 179b. The term "category" refers to an attribute determined depending on a part (e.g., head, neck, and arm) of the model object.

The part object data storage section 179b stores a plurality of items of attribute information (e.g., size, material information, and color information) respectively associated with the plurality of part objects. The color information includes the color and the color arrangement ratio of the part object. For example, when a first color and a second color are assigned to the part object, the part object data storage section 179b stores the color arrangement ratio of the first color to the second color.

In this embodiment, the part object may be downloaded from a server based on information (e.g., operation information from the operation section 160) input by the player, and stored in the part object data storage section 179b and an information storage medium 180.

The information storage medium 180 (computer-readable medium) stores a program, data, and the like. The function of the information storage medium 180 may be implemented by an optical disk (CD or DVD), a magneto-optical disk (MO), a magnetic disk, a hard disk, a magnetic tape, a memory (ROM), a memory card, or the like.

The processing section 100 performs various processes according to this embodiment based on a program (data) stored in the information storage medium 180.

Specifically, a program that causes a computer to function as each section according to this embodiment (i.e., a program that causes a computer to execute the process of each section) is stored in the information storage medium 180. A player's personal data, game save data, and the like may be stored in the information storage medium 180.

In this embodiment, the model object data and the part object data may be stored in the information storage medium 180, and loaded into the model object data storage section 179a and the part object data storage section 179b, if necessary.

A display section 190 outputs an image generated according to this embodiment. The function of the display section 190 may be implemented by a CRT, an LCD, a touch panel display, a head mount display (HMD), or the like. A sound output section 192 outputs sound generated according to this embodiment. The function of the sound output section 192 may be implemented by a speaker, a headphone, or the like.

The communication section 196 performs various types of control for communicating with the outside (e.g., host device or another image generation device). The function of the communication section 196 may be implemented by hardware such as a processor or a communication ASIC, a program, and the like.

A program (data) that causes a computer to function as each section according to this embodiment may be downloaded from a server through a network, and stored in the storage section 170 or the information storage medium 180. The scope of the invention also includes the program stored in a storage section of the server.

The processing section 100 (processor) performs various processes using a main storage section 171 of the storage section 170 as a work area. The function of the processing section 100 may be implemented by hardware such as a processor (e.g., CPU or DSP) or an ASIC (e.g., gate array), or a program.

The processing section 100 includes an object space setting section 110, a movement/motion processing section 111, a virtual camera control section 112, a reception section 113, a setting section 114, a slot state update section 115, a model object data update section 116, a game calculation section 117, a hit determination section 118, a hit effect processing section 119, a drawing section 120, and a sound generation section 130. The processing section 100 may have a configuration in which some of these sections are omitted.

The object space setting section 110 disposes an object (i.e., an object formed by a primitive such as a polygon, a free-form surface, or a subdivision surface) that represents a display object (e.g., model object, character, building, stadium, car, tree, pillar, wall, or map (topography) in an object space. Specifically, the object space setting section 110 determines the position and the rotational angle (synonymous with orientation or direction) of the model object in a world coordinate system, and disposes the object at the determined position (X, Y, Z) and the determined rotational angle (rotational angles around X, Y, and Z axes).

The movement/motion processing section 111 calculates the movement/motion (movement/motion simulation) of the object (e.g., character, car, or airplane). Specifically, the movement/motion processing section 111 causes the object to move or make a motion (animation) in the object space based on the operation data input by the player using the operation section 160, a program (movement/motion algorithm), various types of data (motion data), and the like. More specifically, the movement/motion processing section 111 performs a simulation process that sequentially calculates movement information (position, rotational angle, speed, or acceleration) and motion information (position or rotational angle of each part object) of the object every frame (1/60th of a second). Note that the term "frame" refers to a time unit when performing an object movement/motion process (simulation process) or an image generation process.

The virtual camera control section 112 controls a virtual camera (viewpoint) for generating an image viewed from a given (arbitrary) viewpoint in the object space. Specifically, the virtual camera control section 112 controls the position (X, Y, Z) or the rotational angle (rotational angles around X, Y, and Z axes) of the virtual camera (i.e., controls the viewpoint position or the line-of-sight direction).

For example, when photographing the object (e.g., character, ball, or car) from behind using the virtual camera, the virtual camera control section 112 controls the position or the rotational angle (direction) of the virtual camera so that the virtual camera follows a change in position or rotation of the object. In this case, the virtual camera control section 112 may control the virtual camera based on information (e.g., position, rotational angle, or speed) of the object obtained by the movement/motion processing section 111. Alternatively, the virtual camera control section 112 may rotate the virtual camera by a predetermined rotational angle, or may move the virtual camera along a predetermined path. In this case, the virtual camera control section 112 controls the virtual camera based on virtual camera data that specifies the position (moving path) or the rotational angle of the virtual camera. When a plurality of virtual cameras (viewpoints) are provided, the above-described control process is performed on each virtual camera.

The reception section 113 receives selection of the part object for each category. Specifically, the reception section 113 receives selection of one category among a plurality of categories displayed on the screen based on information input by the player, and receives selection of one part object among a plurality of part objects for the selected category. Specifically, the reception section 113 according to this embodiment receives selection of one part object for one category based on information input by the player.

The setting section 114 determines the part object for each category, and sets the determined part object to be an element of the model object. For example, the setting section 114 may determine the part object that has been selected and received by the reception section 113 to be the part object for each category.

The setting section 114 may determine a plurality of categories among all of the categories under a predetermined condition based on a given algorithm, determine one part object for each of the determined categories under a predetermined condition, and set the determined part object to be an element of the model object.

When designation information that indicates the category of the already set part object has been stored in association with the selected part object and designation information that indicates the category of the selected part object has been stored in association with the already set part object, the setting section 114 may set the selected part object or the set part object.

When the selected part object is set to be an element of the model object and another part object data has been disposed in the slot that corresponds to each of one or more pieces of part object data that forms the selected part object, the slot state update section 115 determines whether or not to update the slot state data based on part object priority information that determines the disposition priority of the part object data, and updates the slot state data stored in the slot state data storage section 177 based on the determination result. Specifically, the slot state update section 115 disposes (sets) the part object data in each slot.

The term "priority information" refers to information for disposing (setting) the part object data with higher disposition priority (i.e., higher-order part object data) in the slot preferentially over the part object data with lower disposition priority (i.e., lower-order part object data). The priority information is set for each category.

The model object data update section 116 updates the model object data stored in the model object data storage section 179a based on the slot state data stored in the slot state data storage section 177.

Specifically, the model object data update section 116 may read the part object data disposed in the slot for which the slot state data has been updated from the part object data storage section 179b, and store the part object data in a first buffer (update buffer) of the model object data storage section 179a. The model object data update section 116 may copy the part object data disposed in the slot for which the slot state data has not been updated to the first buffer from a second buffer of the model object data storage section 179a that stores the model object data that has been disposed. Note that the model object data update section 116 may read the part object data disposed in the slot for which the slot state data has not been updated from the part object data storage section 179b, and store the part object data in the first buffer.

The game calculation section 117 performs a game process based on operation data from the operation section 160, a program, and the like. Examples of game calculations include starting the game when game start conditions have been satisfied, proceeding with a game, disposing an object such as a character or a map, displaying the object, calculating game results, and finishing the game when game end conditions have been satisfied.

Specifically, the game calculation section 117 changes the strength values and the durability values of first and second model objects based on a hit determination result. For example, the game calculation section 117 causes the first model object to move and make a motion (i.e., an attack motion) based on attack input information for the first model object, and subtracts a predetermined value (e.g., a damage value determined by the power of the attack) from the strength value of the second model object when it has been determined that the first model object has hit the second model object. When the second model object has defended the attack of the first model object, the game calculation section 117 adds a predetermined value (i.e., a damage value determined by the power of the attack) to the durability value of the second model object without decrementing the strength value of the second model object even if the first model object has hit the second model object. The second model object cannot defend the attack of the first model object when the durability value has exceeded a threshold value. In this case, the game calculation section 117 subtracts the damage value determined by the power of the attack of the first model object from the strength value of the second model object.

The game calculation section 117 determines that the model object of which the strength value has reached zero earlier than the other model object within a predetermined period after the game has started has been defeated by the other model object. The game calculation section 117 compares the strength value of the first model object with the strength value of the second model object when the strength value of each model object is larger than zero when the predetermined period has elapsed, and determines that the model object having a strength value larger than that of the other model object has won the game. When the strength value of the first model object is the same as the strength value of the second model object, the game calculation section 117 determines that the game has ended in a draw.

The hit determination section 118 determines whether or not an object has hit the model object. The term "object" includes the opposing model object (enemy model object), a weapon (sword) possessed by the opposing model object, and the like. For example, the hit determination section 118 determines whether or not the first model object (e.g., opposing model object) has hit the second model object (e.g., model object operated by the player). Specifically, the hit determination section 118 determines whether or not the first model object has hit the second model object using a hit area of the first model object and a hit area of the second model object.

The hit effect processing section 119 performs a hit effect process under a predetermined condition when the hit determination section 118 has determined that the object has hit the model object. The predetermined condition is a condition whereby the part object is destroyed. For example, when the hit determination section 118 has determined that the opposing model object has attacked the player's model object and hit the hit area corresponding to the upper part, the middle part, or the lower part of the player's model object, the hit effect processing section 119 determines whether or not the durability value of the player's model object has exceeded the threshold value. When the hit effect processing section 119 has determined that the durability value of the player's model object has exceeded the threshold value, the hit effect processing section 119 determines that the predetermined condition is satisfied, and performs the hit effect process.

The hit effect processing section 119 performs the hit effect process based on the attribute information of the part object corresponding to the hit position of the model object. Specifically, the hit effect processing section 119 selects an effect object corresponding to the material information of the part object corresponding to the hit position of the model object from a plurality of effect objects, and performs the hit effect process using the selected effect object.

The hit effect processing section 119 determines the color of the effect object based on the color information of the part object corresponding to the hit position of the model object, and performs the hit effect process using the effect object of the determined color. In this case, the hit effect processing section 119 determines the color of the effect object and the number of effect objects of the determined color based on the color arrangement information of the part object corresponding to the hit position of the model object.

The hit effect processing section 119 determines the number of effect objects based on the size of the part object corresponding to the hit position of the model object.

When a plurality of part objects are associated with the hit position of the model object, the hit effect processing section 119 performs the hit effect process on each part object based on the attribute information of the part object.

The drawing section 120 performs a drawing process based on the results of various processes (game process) performed by the processing section 100 to generate an image, and outputs the generated image to the display section 190. When generating a three-dimensional game image, the drawing section 120 performs a geometric process such as coordinate transformation (world coordinate transformation or camera coordinate transformation), clipping, or perspective transformation, and creates drawing data (e.g., position coordinates of primitive vertices, texture coordinates, color data, normal vector, or alpha value) based on the processing results. The drawing section 120 draws the object (one or more primitives) subjected to perspective transformation (geometric process) in an image buffer 173 (i.e., a buffer that can store image information in pixel units (e.g., frame buffer or intermediate buffer (work buffer)); VRAM) based on the drawing data (object data). The drawing section 120 thus generates an image viewed from the virtual camera (given viewpoint) in the object space. When a plurality of virtual cameras (viewpoints) are provided, the drawing section 120 performs the drawing process so that images viewed from the virtual cameras can be displayed on one screen as divided images.

The drawing section 120 includes a geometric processing section 122, a shading processing section 124, an alpha blending section 126, and a hidden surface removal section 128.

The geometric processing section 122 performs the geometric process on the object. Specifically, the geometric processing section 122 performs the geometric process such as coordinate transformation, clipping, perspective transformation, and light source calculations. The object data (e.g., object's vertex position coordinates, texture coordinates, color data (luminance data), normal vector, or alpha value) after the geometric process (perspective transformation) is stored in the object data storage section 179.

The shading processing section 124 performs a shading process that shades in the object. Specifically, the shading processing section 124 adjusts the luminance of the drawing pixel of the object based on the results (shade information) of light source calculations performed by the geometric processing section 122. The shading processing section 124 may perform light source calculations in place of the geometric processing section 122. The shading processing section 124 may subject the object to flat shading or smooth shading (e.g., Gouraud shading or Phong shading) as the shading process.

The alpha blending section 126 performs a translucent blending process (e.g., normal alpha blending, additive alpha blending, or subtractive alpha blending) based on the alpha value (A value). When performing normal alpha blending, the alpha blending section 126 performs a process shown by the following expressions (1) to (3).

$$R_Q = (1 - \mathrm{alpha}) \times R_1 + \mathrm{alpha} \times R_2 \qquad (1)$$

$$G_Q = (1 - \mathrm{alpha}) \times G_1 + \mathrm{alpha} \times G_2 \qquad (2)$$

$$B_Q = (1 - \mathrm{alpha}) \times B_1 + \mathrm{alpha} \times B_2 \qquad (3)$$

When performing additive alpha blending, the alpha blending section 126 performs a process shown by the following expressions (4) to (6).

$$R_Q = R_1 + \mathrm{alpha} \times R_2 \qquad (4)$$

$$G_Q = G_1 + \mathrm{alpha} \times G_2 \qquad (5)$$

$$B_Q = B_1 + alpha \times B_2 \qquad (6)$$

When performing subtractive alpha blending, the alpha blending section 126 performs a process shown by the following expressions (7) to (9).

$$R_Q = R_1 - alpha \times R_2 \qquad (7)$$

$$G_Q = G_1 - alpha \times G_2 \qquad (8)$$

$$B_Q = B_1 - alpha \times B_2 \qquad (9)$$

$R_1$, $G_1$, and $B_1$ represent the RGB components of the image (original image) that has been drawn in the image buffer 173, and $R_2$, $G_2$, and $B_2$ represent the RGB components of the image to be drawn in the image buffer 173. $R_Q$, $G_Q$, and $B_Q$ represent the RGB components of the image obtained by alpha blending. Note that the alpha value is information that can be stored in association with each pixel (texel or dot), such as additional information other than the color information. The alpha value may be used as mask information, translucency (equivalent to transparency or opacity), bump information, or the like.

The hidden surface removal section 128 performs a hidden surface removal process by a Z-buffer method (depth comparison method or Z-test) using a Z-buffer 175 (depth buffer) that stores the Z-value (depth information) of the drawing pixel. Specifically, the hidden surface removal section 128 refers to the Z-value stored in the Z-buffer 175 when drawing the drawing pixel corresponding to the primitive of the object. The hidden surface removal section 128 compares the Z-value stored in the Z-buffer 175 with the Z-value of the drawing pixel of the primitive. When the Z-value of the drawing pixel is the Z-value in front of the virtual camera (e.g., a small Z-value), the hidden surface removal section 128 draws the drawing pixel and updates the Z-value stored in the Z-buffer 175 with a new Z-value.

The sound generation section 130 performs a sound generation process based on the results of various processes performed by the processing section 100 to generate game sound such as background music (BGM), effect sound, or voice, and outputs the generated game sound to the sound output section 192.

The image generation device according to this embodiment may be a system dedicated to a single-player mode that allows only one player to play the game, or may be a system provided with a multi-player mode that allows a plurality of players to play the game.

When a plurality of players play the game, the game images and the game sound provided to the players may be generated by one terminal.

The image generation device according to this embodiment may exchange data (e.g., input information) with one or more image generation devices connected through a network (transmission line or communication channel) to implement an online game.

2. Outline of method according to this embodiment

2-1. Slot

In this embodiment, the part object data is disposed (set) in each of a plurality of slots that form the model object.

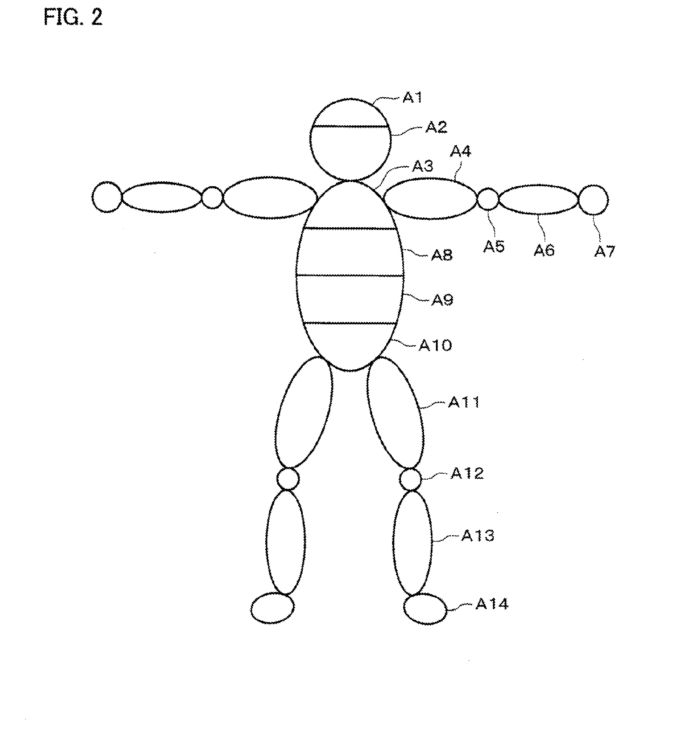

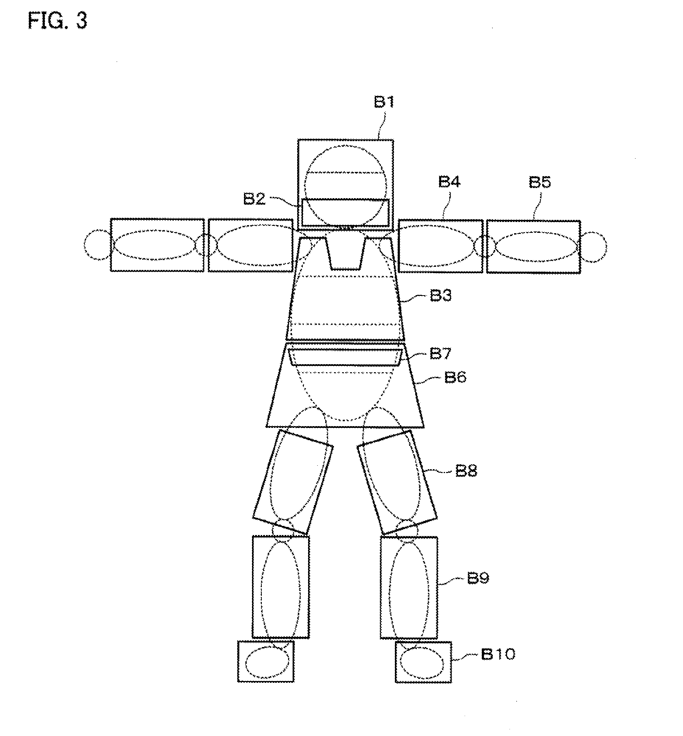

The term "slot" refers to a part object data disposition space set in a model coordinate system, and corresponds to the component part of the model object. In this embodiment, body slots A1 to A14 (first slots in a broad sense) illustrated in FIG. 2 that correspond to the component parts of a human body, and item slots B1 to B10 (second slots in a broad sense) illustrated in FIG. 3 that correspond to the component parts of an ornament attached to the human body are provided.

In FIG. 2, fourteen body slots A1 to A14 correspond to the component parts of the human body. For example, the arm is made up of four body slots A4 to A7. The body slot A4 corresponds to the upper arm, the body slot A5 corresponds to the elbow, the body slot A6 corresponds to the forearm, and the body slot A7 corresponds to the hand, for example. A part object such as a shirt or a jacket can also be disposed in the body slots A1 to A14 instead of the part object corresponding to the component part of the human body. For example, parts of a short sleeve T-shirt can be formed using the body slots A3, A4, A8, and A9, and parts of a long sleeve T-shirt can be formed using the body slots A3 to A6, A8, and A9.

In FIG. 3, the item slots B1 to B10 are disposed to overlap one or more body slots. The item slots B1 to B10 are used when it is necessary to dispose a plurality of pieces of part object data in layers, such as when dressing the model object in two or more suits of clothes one over the other. In other words, the item slots B 1 to B10 may be referred to as overlapping slots. For example, the item slot B2 is used when disposing a beard on the face. Full armor may be set using the item slots B1, B3 to B6, and B8 to B10. The part object data that is given disposition priority over the part object data disposed corresponding to the body slots A1 to A14 is basically disposed in the item slots B1 to B10. The part object data disposed in one item slot may be given disposition priority over the part object data disposed in another item slot. For example, the item slot B7 is used when the model object wears a belt over a uniform or wears a belted skirt. The part object data that is given disposition priority over the part object data disposed in the item slot B8 is disposed in the item slot B7.

According to this embodiment, an image of a model object that wears a plurality of part objects in layers can be generated by providing the body slots A1 to A14 and the item slots B1 to B10 and disposing the part object data in each slot to form a model object. An image in which a joint is observed through the opening in armor can be generated by disposing the part object data in the item slots B1 to B10 and disposing the part object data in the body slots A1 to A14 in layers, for example.

2-2. Categorization method

In this embodiment, each part object is stored in the part object data storage section 179b in association with one of a plurality of categories.

Specifically, one or more pieces of part object data (slot-unit part object data) to be disposed in one or more body slots or item slots are stored in the part object data storage section 179b in association with one category.

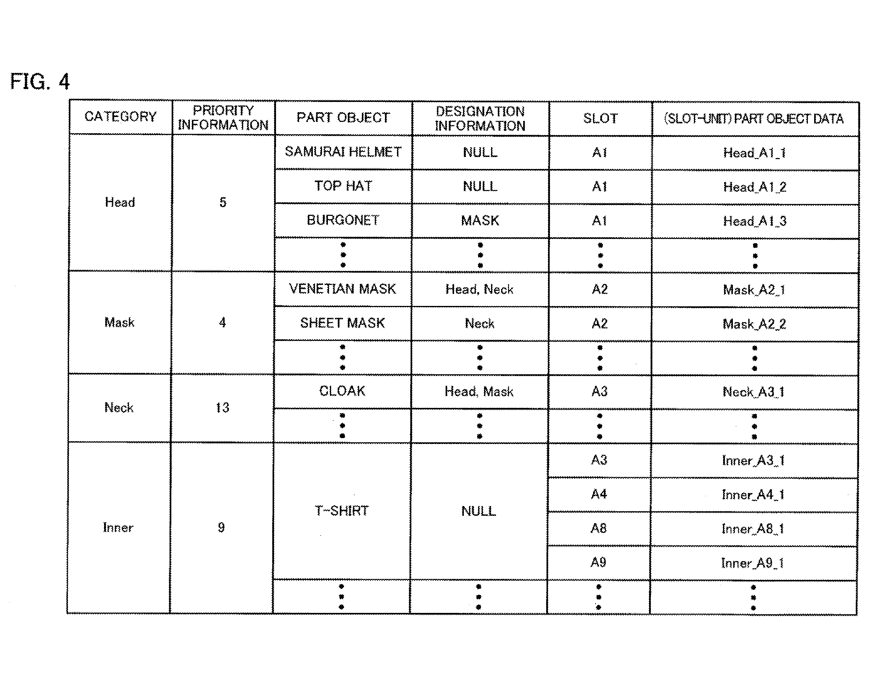

The relationship between the part objects is described below with reference to FIG. 4. For example, part objects "samurai helmet", "burgonet", and "top hat" are classified into a category "Head" that determines the upper part of the head of the model object, and disposed in the body slot A1.

A part object "Venetian mask" is classified into a category "Mask" that determines the mask of the model object, and disposed in the body slot A2.

In this embodiment, the priority information that indicates the disposition priority is set in advance for each category, as illustrated in FIG. 4. The priority information is used when updating the slot state data that determines the part objects disposed in the body slots A1 to A14 or the item slots B1 to B10. Note that the slot state data may be exceptionally updated regardless of the priority information.

In this embodiment, the part object data (slot-unit part object data) corresponding to each slot is stored in the part object data storage section 179b, as illustrated in FIG. 4. For example, part object data Inner_A3_1 corresponding to the slot A3, part object data Inner_A4_1 corresponding to the slot A4, part object data Inner_A8_1 corresponding to the slot A8, and part object data Inner_A9_1 corresponding to the slot A9 are stored in the part object data storage section 179b corresponding to a part object "T-shirt" in a category "Inner".

In this embodiment, when disposing the higher-order part object data, disposition clear information for clearing the setting of the slot corresponding to the lower-order part object data may be stored.

The disposition clear information specifies the slot for which the part object data is hidden behind the part object data disposed in the item slot and need not be disposed when the part object data is disposed in the body slot (e.g., A8) and the item slot (e.g., B3) in layers. When updating the slot state data, the part object data is not disposed in the slot specified by the disposition clear information, or the part object data that has been disposed is cleared based on the disposition clear information.

2-3. Selection of part object

In this embodiment, selection of the part object corresponding to each category is received based on information input by the player, and the selected part object is set to be an element of the model object.

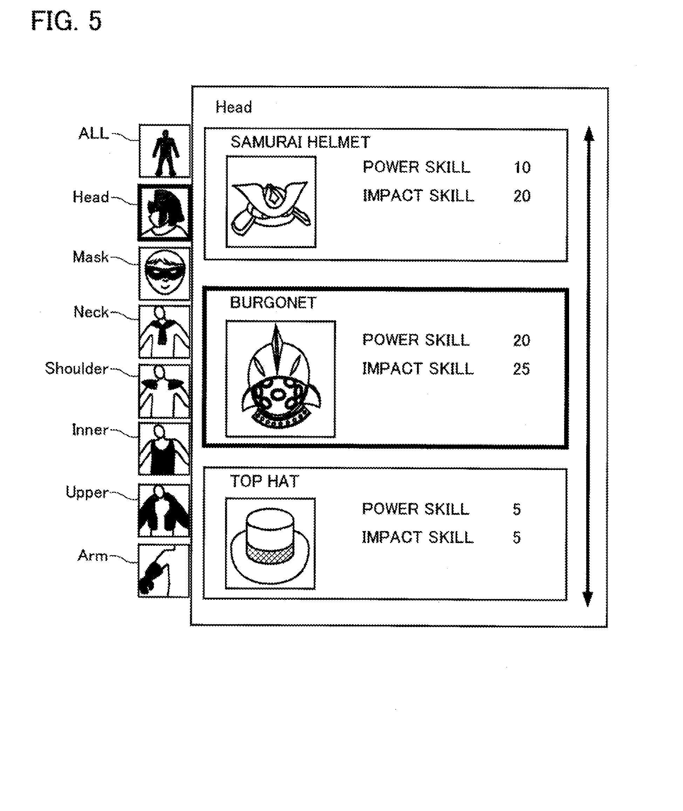

FIG. 5 illustrates an example of a part object selection screen. In this embodiment, selection of one of a plurality of categories is received, and selection of one of a plurality of part objects in the selected category is received, for example. FIG. 5 illustrates an example of an image in which the category "Head" is selected from a plurality of categories, and the part object "burgonet" is selected from a plurality of part objects that belong to the category "Head".

In this embodiment, a parameter (e.g., power skill value and impact skill value) used for game calculations is set for each part object, and a skill that gives an advantage to the player can be set based on the parameter. This makes it possible to change the part objects on the model object taking account of the strategy of the game.

2-4. Selection of color of part object

In this embodiment, the color of each part object that forms the model object is determined based on information input by the player.

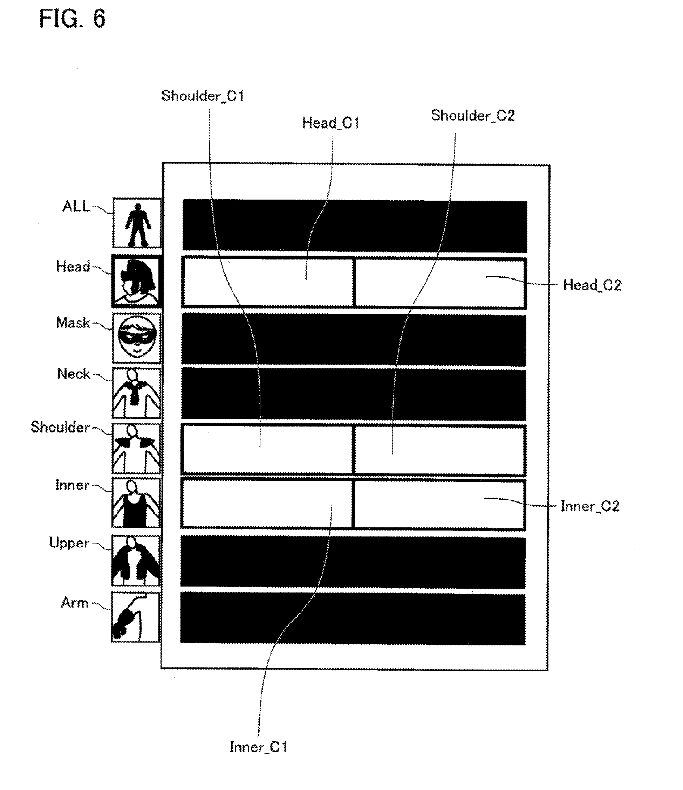

FIG. 6 illustrates an example of a color selection screen for selecting the color of the part object. In this embodiment, the color of the part object that forms the model object among the plurality of categories is determined based on information input by the player, for example. In FIG. 6, a color Head_C1 assigned to an area 1 of the part object (e.g., "top hat") in the category "Head" and a color Head_C2 assigned to an area 2 of the part object are displayed, for example.

In this embodiment, a plurality of stages of saturation (or vividness) are provided, and a color based on the saturation can be determined. For example, red having a saturation of 1 is dark red, and red having a saturation of 9 is clear and bright red.

In this embodiment, when selection of the area of a given part object (e.g., the area 1 of the part object "top hat") has been received, color palette coordinates (hue and saturation) for determining the color (e.g., Head_C1) of the selected area are displayed on the display section 190. The color of the selected area is determined based on the hue and the saturation indicated by the coordinate values input by the player.

2-5. Setting of body information

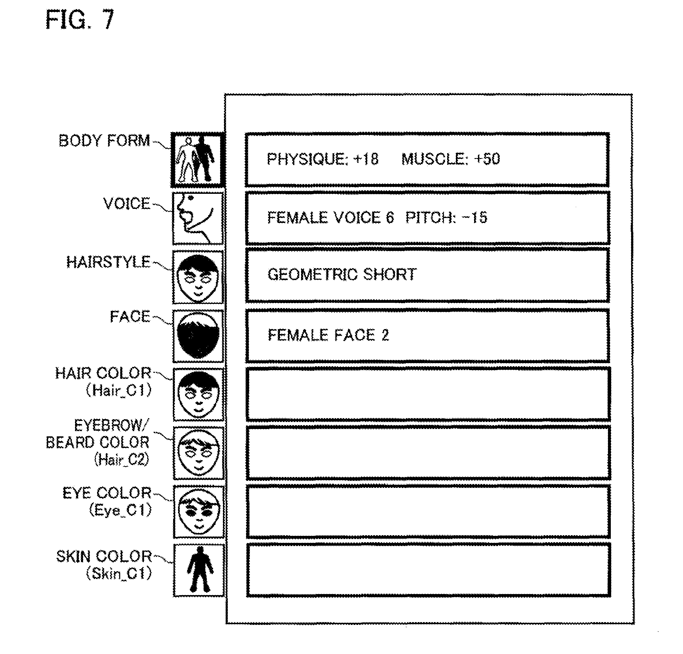

In this embodiment, body information of the model object can be determined based on information input by the player. FIG. 7 illustrates an example of a model object body information setting screen.

In this embodiment, a hair color Hair_C1, an eyebrow/beard color Hair_C2, an eye color Eye_C1, and a skin color Skin_C1 of the model object can be determined using a method similar to the part object color determination method.

2-6. Slot state data update process

In this embodiment, the part object data of the part object that forms the model object is disposed in the slot by a slot state data update process.

In this embodiment, it is determined that the slot state data of the slot corresponding to the part object data of the part object selected by the player must be updated when no part object is disposed in the slot that corresponds to the part object selected by the player, and the part object data of the part object selected by the player is disposed in the slot that corresponds to the part object data of the part object selected by the player to update the slot state data.

For example, when the player has selected the part object "top hat" from a plurality of part objects that belong to the category "Head" and the part object in the category "Head" is not disposed, the part object data of the part object "top hat" is disposed to update the slot state data.

In this embodiment, when the part object data of the part object that is other than the part object selected by the player and belongs to the same category as the part object selected by the player has been disposed, the part object data of the part object selected by the player is disposed in place of the part object data of the part object other than the part object selected by the player to update the slot state data.

For example, when the player has selected the part object "top hat" from the part objects that belong to the category "Head" and the part object data of the part object "samurai helmet" that belongs to the category "Head" has been disposed in the slot, the part object data of the part object "top hat" is disposed in place of the part object data of the part object "samurai helmet" to update the slot state data.

In this embodiment, when the part object data of the part object that belongs to a category differing from the category of the part object data of the part object selected by the player has been disposed in the slot that corresponds to the part object data of the part object selected by the player, the disposition priorities of the categories determined based on the priority information are compared in slot units to update the slot state data.

Note that whether or not to update the slot state data is determined in slot units corresponding to the part object data of the part object even when a plurality of slots are designated for the part object, and the slot state data is updated in slot units. This minimizes the amount of object data that forms the model object while appropriately dressing the model object in two or more suits of clothes one over the other.

Specifically, the slot state data may be updated as described in (A) to (C) given below.

(A) When the part object data of another part object (i.e., a part object that belongs to a category differing from the category of the part object data of the part object selected by the player) has been disposed in the slot that corresponds to the part object data of the part object selected by the player and the part object data of the part object selected by the player is given a disposition priority higher than that of the other part object, it is determined that the slot state data must be updated, and the part object data of the part object selected by the player is disposed in the slot in place of the part object data of the other part object to update the slot state data.

(B) When the part object data of another part object (i.e., a part object that belongs to a category differing from the category of the part object data of the part object selected by the player) has been disposed in the slot that corresponds to the part object data of the part object selected by the player and the part object data of the part object selected by the player is given a disposition priority lower than that of the other part object, it is determined that the slot state data should not be updated. In this case, the part object data of the other part object is continuously disposed without updating the slot state data of the slot.

(C) When the part object data of another part object (i.e., a part object that belongs to a category differing from the category of the part object data of the part object selected by the player) has been disposed in the slot that corresponds to the part object data of the part object selected by the player and the part object data of the part object selected by the player is given a disposition priority equal to that of the other part object, the part object data of the part object selected by the player is disposed in the slot in place of the part object data of the other part object to update the slot state data.

3. Hit effect process

In this embodiment, a game process that implements a fighting game in which the model object operated by the player (player's model object) fights against the opposing model object is performed based on operation information (e.g., attack operation information and defense operation information) input by the player. In this embodiment, when it has been determined that one of the model objects has attacked and hit the other model object, a hit effect process that destroys the part object of the other model object is performed under a predetermined condition. The details are described below.

3-1. Method of performing hit effect process that destroys part object

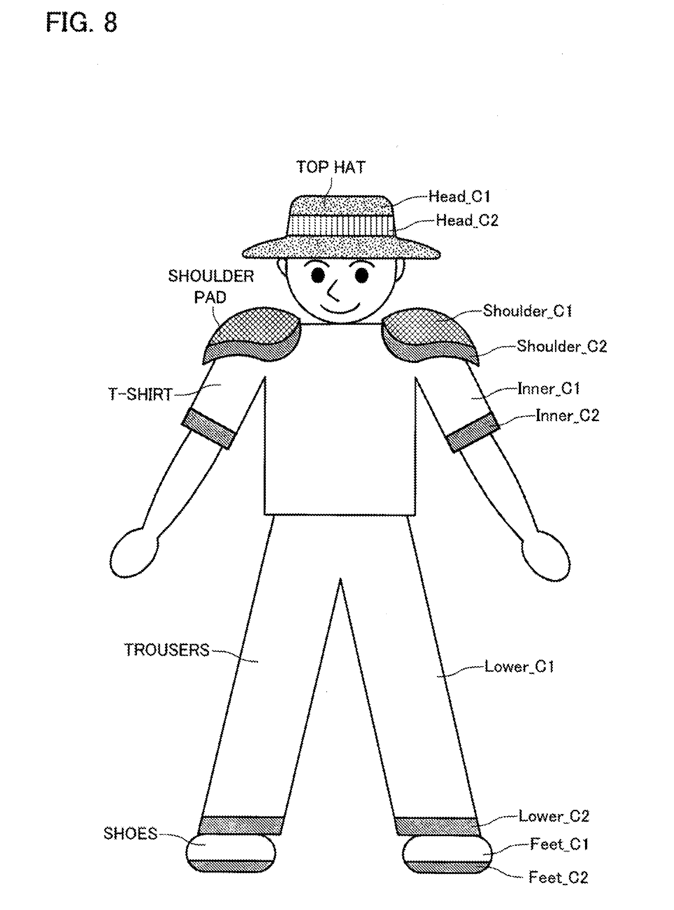

FIG. 8 illustrates an example of the model object according to this embodiment. In the example illustrated in FIG. 8, the part object "top hat" in the category "Head", the part object "shoulder pad" in the category "Shoulder", the part object "T-shirt" in the category "Inner", the part object "trousers" in the category "Lower", and the part object "shoes" in the category "Feet" are set as the elements of the model object.

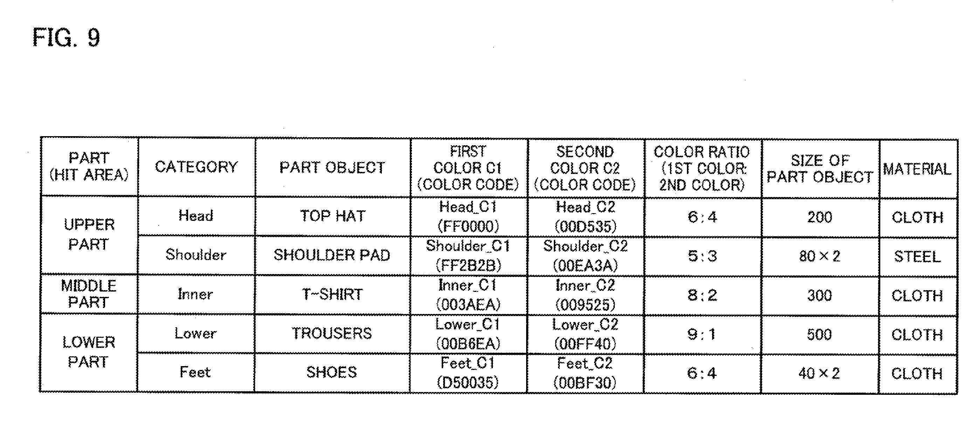

In this embodiment, a plurality of categories are classified in advance into the upper part, the middle part, and the lower part of the model object. As illustrated in FIG. 9, the category "Head" and the category "Shoulder" are classified into the upper part, the category "Inner" is classified into the middle part, and the category "Lower" and the category "Feet" are classified into the lower part, for example.

In this embodiment, whether or not the opposing model object has attacked and hit the player's model object is determined. When it has been determined that the opposing model object has hit the player's model object, the hit effect process that destroys the part object corresponding to the hit position of the player's model object is performed. For example, when the hit position of the player's model object corresponds to the part object in the category classified into the upper part, the part object in the category corresponding to the upper part is destroyed by the hit effect process.

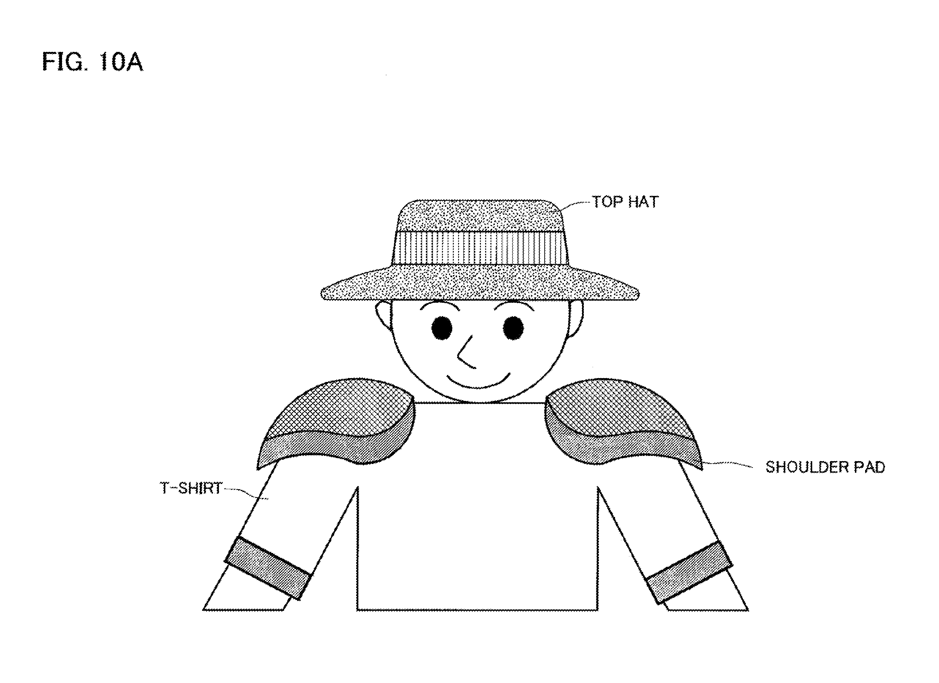

The hit effect process that destroys the part object of the upper part of the player's model object is described in detail below with reference to FIGS. 10A to 10C.

FIG. 10A illustrates an example of the player's model object immediately before the player's model object is hit by the opposing model object. Specifically, the part object "top hat" in the category "Head" and the part object "shoulder pad" in the category "Shoulder" corresponding to the upper part are set as the elements of the model object immediately before the model object is hit by the opposing model object.

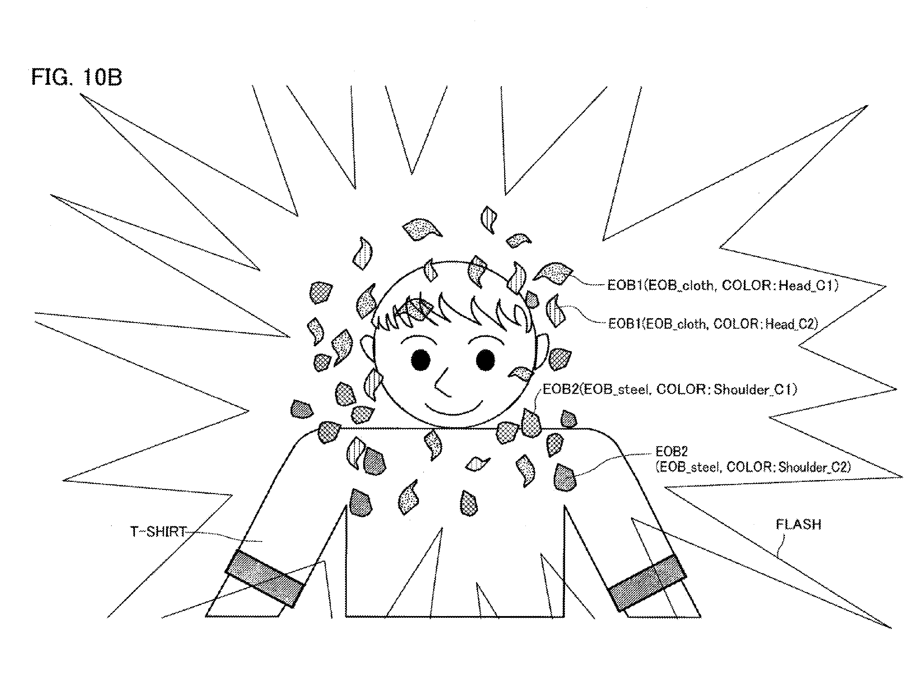

FIG. 10B illustrates an example of an image in a frame immediately after it has been determined that the opposing model object has attacked and hit the player's model object.

In this embodiment, when it has been determined that the opposing model object has hit the player's model object, whether the hit position of the player's model object attacked by the opposing model object corresponds to the upper part, the middle part, or the lower part of the model object is specified. For example, the hit area is divided into an upper hit area, a middle hit area, and a lower hit area. Whether the hit position of the model object corresponds to the upper hit area, the middle hit area, or the lower hit area is specified, and the part of the model object corresponding to the hit position is specified. When the part of the model object corresponding to the hit position has been specified, the hit effect process that destroys the part object corresponding to the specified part is performed.

For example, when the hit position has been specified to be the upper part of the model object, the part objects "top hat" and "shoulder pad" that belong to the category corresponding to the upper part are set to be the destruction target part objects.

In this embodiment, the destruction target part object is deleted from the elements of the model object to update the slot state data. Specifically, the part object "top hat" is deleted from the elements of the model object, and the part object data of the part object "face" is disposed in the slot for which the part object data of the part object "top hat" has been disposed, for example. Likewise, the part object data of the part object "T-shirt" is disposed in the slot for which the part object data of the part object "shoulder pad" has been disposed to update the slot state data.

Specifically, the slot state data is updated so that the upper part (hair) of the head of the model object is observed by deleting the part object "top hat" from the elements of the model object, and the shoulder part of the T-shirt is observed by deleting the part object "shoulder pad" from the elements of the model object. Therefore, the slot-unit part object data of the part object of the model object that is not disposed in the slot is stored in the storage section 170 in advance.

In this embodiment, when a plurality of part objects that differ in category overlap in the body slot (e.g., A8) and the item slot (e.g., B3) and the part object data is not disposed in the body slot (e.g., A8) based on the disposition clear information, the part object data that has been disposed in the item slot (e.g., B3) is cleared when performing the hit effect process that destroys the part object disposed in the item slot (e.g., B3), and the part object data of the part object for the body slot (e.g., A8) stored in the storage section 170 is disposed in the body slot (e.g., A8) to update the slot state data.

In this embodiment, when a plurality of part objects that differ in category have competed for a single slot and the part object data of the higher-order part object has been disposed in the slot, the part object data of the part object that has been disposed in the slot is cleared when performing the hit effect process that destroys the higher-order part object, and the part object data of the lower-order part object stored in the storage section 170 is disposed in the slot to update the slot state data.

Note that the body part object (e.g., face, head, and half naked) is not destroyed. Specifically, only the part object (e.g., clothes and hat) worn by the model object is destroyed. Note that destruction prohibition information is set in advance for the part object that is not destroyed so that the part object that is not destroyed can be distinguished from the destruction target part object.

In this embodiment, a plurality of effect objects EOB that imitate fragments of the destruction target part object are disposed in the object space, as illustrated in FIG. 10B. The effect object EOB is a fragment object (particle) smaller than the part object.

The position of the effect object EOB immediately after destruction is determined based on the position of the model object. For example, a plurality of effect objects EOB are scattered around the model object (within a predetermined range based on the center position of the model object). As illustrated in FIG. 10B, a plurality of effect objects EOB are scattered within the range (e.g., upper part range) corresponding to the part of the destruction target model object.

The position of the effect object EOB immediately after destruction may be randomly determined based on the position of the destruction target part object. For example, a plurality of effect objects EOB1 (EOB1_a and EOB1_b) corresponding to the part object "top hat" may be disposed around a position P1 of the part object "top hat" (within a predetermined range around the position P1), a plurality of effect objects EOB2 (EOB2_a and EOB2_b) corresponding to the right part object "shoulder pad" may be disposed around a position P2_R of the right part object "shoulder pad" (within a predetermined range around the position P2_R), and a plurality of effect objects EOB2 (EOB2_a and EOB2_b) corresponding to the left part object "shoulder pad" may be disposed around a position P2_L of the left part object "shoulder pad" (within a predetermined range around the position P2_L).

As illustrated in FIG. 10B, a flash is displayed around the model object (may be displayed around the upper hit area of the model object) in a frame immediately after the model object has been determined to be hit. In this embodiment, the flash is displayed by disposing a sprite in the object space, mapping a texture having a flash pattern onto the sprite, and performing a billboard process so that the sprite faces the virtual camera, for example. Therefore, the player cannot observe the state in which the part objects "top hat" and "shoulder pad" are deleted and the effect objects EOB1 are EOB2 are disposed in place of the part objects "top hat" and "shoulder pad". In this embodiment, the flash is displayed for a predetermined period (e.g., four frames) after the model object has been determined to be hit while reducing the size of the sprite every frame.

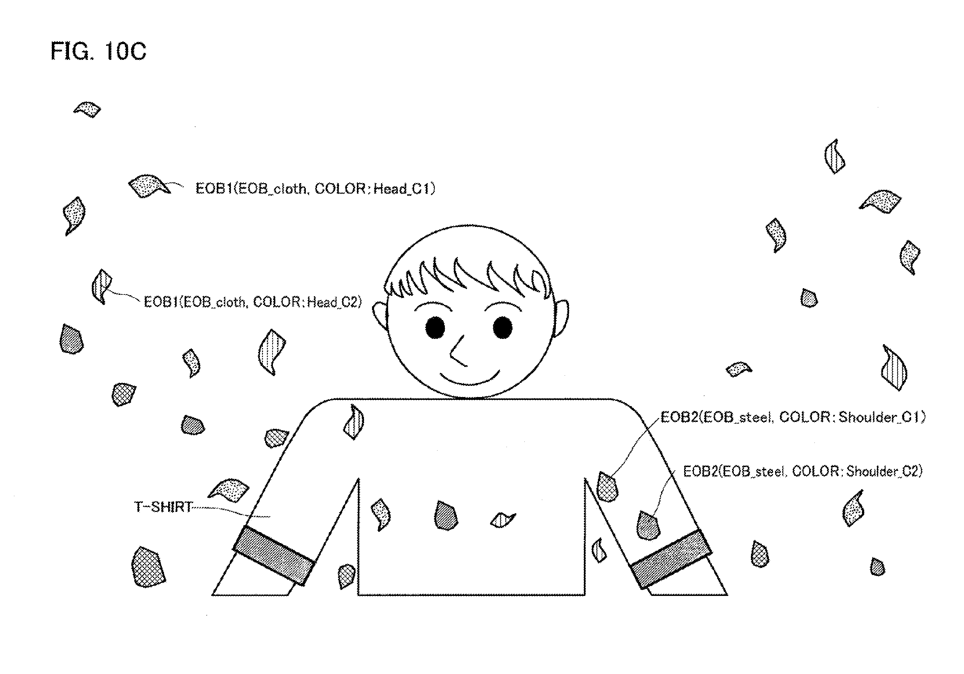

FIG. 10C illustrates an example of an image when several frames (e.g., five frames) have elapsed after the opposing model object has been determined to hit the model object. In this embodiment, the effect objects EOB1 and EOB2 are moved based on predetermined effect object path information (particle information).

According to this embodiment, since the part object is removed from the model object attacked by the opposing model object and a situation in which the part object is destroyed can be displayed, the damage due to the attack can be enhanced so that the player is strongly impressed.

The part object corresponding to the hit position may be specified, and the specified part object may be destroyed by the hit effect process. In this embodiment, the upper hit area, the middle hit area, and the lower hit area of the model object are provided, the part (i.e., the upper part, the middle part, or the lower part) corresponding to the hit area to which the hit position belongs is specified, and the hit effect process that destroys one or more part objects corresponding to the specified part is performed. Therefore, since the part object corresponding to the hit position need not be accurately specified, the destruction target part object can be specified by a simple process.

3-2. Effect object

In this embodiment, the number, shape, color, and the like of the effect objects are determined based on the attribute of each destruction target part object. Specifically, a situation in which the destruction target part object is destroyed so that fragments of the destruction target part object are scattered is represented by utilizing the effect objects similar to the destruction target part object. The term "attribute" refers to the size, the material, and the color of the part object, for example. In this embodiment, the attribute (size, material, and color) is stored in advance in the part object data storage section 179b in association with the part object.

A process of determining the number of effect objects based on the size of the part object is described below. In this embodiment, the number of effect objects is determined based on the size of the part object.

For example, when the size of the part object "top hat" is 200 and the size of the part object "shoulder pad" is 80 (the total size of the right and left part objects "shoulder pad" is 160), as illustrated in FIG. 9, the number of effect objects EOB1 corresponding to the part object "top hat" is determined to be 20, and the number of effect objects EOB2 corresponding to the part object "shoulder pad" is determined to be 8 (the total number of effect objects EOB2 corresponding to the right and left part objects "shoulder pad" is 16). Specifically, the number of effect objects EOB1 corresponding to the part object "top hat" is determined so that the number of effect objects EOB1 is larger than the number of effect objects EOB2 corresponding to the part object "shoulder pad".

In this embodiment, the effect object is selected from a plurality of effect objects provided in advance based on the material of the destruction target part object, and the hit effect process is performed using the selected effect object.

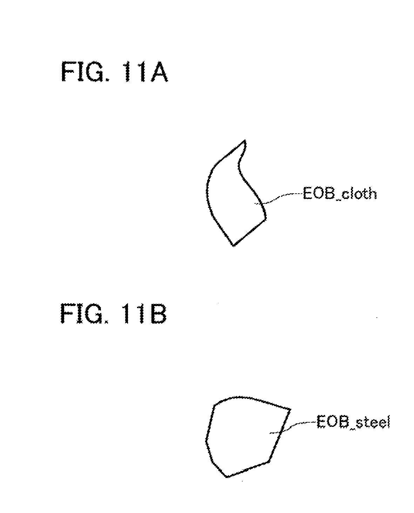

FIGS. 11A and 11B illustrate examples of the effect object. FIG. 11A illustrates a cloth effect object EOB_cloth. In this embodiment, when the material of the destruction target part object is "cloth", the cloth effect object EOB_cloth is selected. FIG. 11B illustrates a steel effect object EOB_steel. In this embodiment, when the material of the destruction target part object is "steel", the steel effect object EOB_steel is selected.

For example, since the material of the part object "top hat" is "cloth", as illustrated in FIG. 9, the cloth effect object EOB_cloth is selected as the effect object EOB1 corresponding to the part object "top hat", as illustrated in FIG. 10B, and the hit effect process is performed using the cloth effect object EOB_cloth. Since the material of the part object "shoulder pad" is "steel", as illustrated in FIG. 9, the steel effect object EOB_steel is selected as the effect object EOB2 corresponding to the part object "shoulder pad", as illustrated in FIG. 10B, and the hit effect process is performed using the steel effect object EOB_steel.

In this embodiment, the color of the effect object is determined based on the color of the destruction target part object, and the hit effect process is performed using the effect object of the determined color.

For example, since a color is set in advance for the part object set be an element of the model object, the color of the effect object is determined to be the color of the part object. When a plurality of colors are set for the destruction target part object, the color of each effect object is determined according to each color of the destruction target part object.

For example, when a first color of the part object "top hat" is a color Head_C1, the color of some of the effect objects EOB 1 corresponding to the part object "top hat" is determined to be the color Head_C1, as illustrated in FIG. 10B.

When a second color of the part object "top hat" is a color Head_C2, the color of the remaining effect objects EOB1 corresponding to the part object "top hat" is determined to be the color Head_C2.

Likewise, when a first color of the part object "shoulder pad" is a color Shoulder_C1, the color of some of the effect objects EOB2 corresponding to the part object "shoulder pad" is determined to be the color Shoulder_C1.

When a second color of the part object "shoulder pad" is a color Shoulder_C2, the color of the remaining effect objects EOB2 corresponding to the part object "shoulder pad" is determined to be the color Shoulder_C2.

In this embodiment, when a plurality of colors are set for the part object, the number of effect objects of each color is determined based on the color arrangement ratio.

For example, when the ratio of the first color (Head_C1) to the second color (Head_C2) of the part object "top hat" is 6:4 and the number of effect objects EOB1 corresponding to the part object "top hat" has been determined to be 20, the color of twelve effect objects EOB1 (60%) among the twenty effect objects EOB1 is determined to be the first color (Head_C1) of the part object "top hat", and the color of the remaining eight effect objects EOB1 (40%) is determined to be the second color (Head_C2) of the part object "top hat".

Therefore, the player is further impressed as if the effect objects were fragments of the destruction target part object. In this embodiment, the number of colors of the effect objects may be three or more. In this case, the effect objects of each color and the number of effect objects of each color are determined based on the color arrangement ratio of the part object. The color of the effect object is determined as the color of the vertex of the polygon that forms the effect object.

3-3. Part object destruction condition

The game system according to this embodiment performs a process that implements a fighting game in which the player operates the model object and fights against the opposing model object. For example, the game system performs a hit determination process (collision determination process) that determines whether or not the player's model object has hit the opposing model object based on operation input information that causes the player's model object to attack the opposing model object and operation input information that causes the player's model object to defend an attack of the opposing model object. For example, the game system determines whether or not the hit area of the opposing model object that corresponds to a weapon has hit the upper hit area, the middle hit area, or the lower hit area of the player's model object based on input information that causes the opposing model object to swing the weapon (e.g., sword) (attack motion).

When the game system has determined that the opposing model object has attacked and hit the player's model object, the game system decrements the strength value of the player's model object according to the power of the attack. In this case, when the player has performed a defense operation input, the player's model object can defend the attack of the opposing model object based on the durability value. In this embodiment, when the player's model object has defended the attack of the opposing model object, the durability value of the player's model object is incremented according to the power of the attack of the opposing model object. When the durability value has exceeded the threshold value, the player's model object cannot defend the attack of the opposing model object, and the strength value of the player's model object is decremented according to the power of the attack.

In this embodiment, the part object is destroyed based on the durability value. For example, when the game system has determined that the opposing model object has attacked the player's model object and hit the upper hit area, the middle hit area, or the lower hit area, the game system determines whether or not the durability value of the player's model object has exceeded the threshold value. When the game system has determined that the durability value of the player's model object has exceeded the threshold value, the game system performs the hit effect process that destroys one or more part objects corresponding to the upper hit area, the middle hit area, or the lower hit area corresponding to the hit position.

Therefore, a situation in which the durability of the player's model object has decreased can be realistically represented by performing the effect process that destroys the part object.

In this embodiment, the hit effect process that destroys the player's model object may be performed when the opposing model object has made a special attack (e.g., an attack that cannot be guarded by the player's model object).

4. Process according to this embodiment

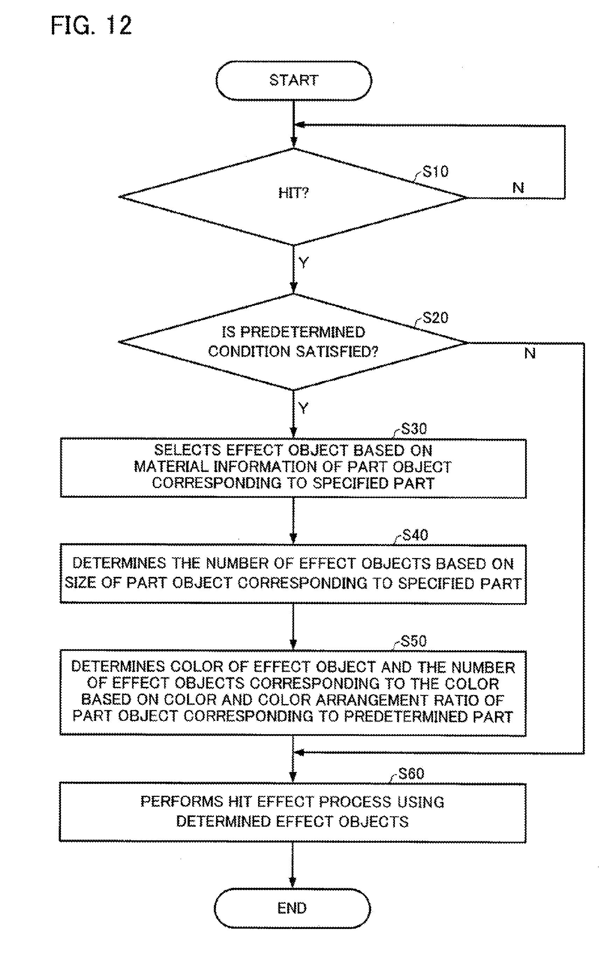

The flow of the process according to this embodiment is described below with reference to FIG. 12. Whether or not the opposing model object has attacked and hit the player's model object is determined (step S10). When it has been determined that the opposing model object has attacked and hit the player's model object (Y in step S10), whether or not the predetermined condition is satisfied is determined (step S20). For example, whether or not the durability value of the player's model object that has been hit by the opposing model object has exceeded the threshold value, is determined. When it has been determined that the predetermined condition is satisfied (Y in step S20), the part of the player's model object corresponding to the hit position is specified, and the effect object is selected from a plurality of effect objects based on the material information of the part object corresponding to the specified part (step S30). The number of effect objects is determined based on the size of the part object corresponding to the specified part (step S40), and the color of the effect object and the number of effect objects corresponding to the color are determined based on the color and the color arrangement ratio of the part object corresponding to the specified part (step S50). The hit effect process is performed using the determined effect objects (step S60). The process is thus completed.

5. Application example

5-1. Application example of effect object drawing method

In this embodiment, a plurality of textures having an effect pattern may be stored in the storage section in advance, one texture may be selected from the plurality of textures based on the attribute of the destruction target part object, and the selected texture may be mapped onto the effect object.

For example, when the material information of the destruction target part object indicates cloth and the color of the destruction target part object is red, a red texture having a cloth pattern is selected and mapped onto the effect object.

5-2. Application example of hit effect process

In this embodiment, a hit effect process that drops the destruction target part object on the ground may be performed. For example, when the destruction target part object is a samurai helmet, the samurai helmet is dropped by physical calculations. The drop target samurai helmet may be a drop samurai helmet differing from the part object "samurai helmet" as the element of the model object. When dropping the drop samurai helmet, the color of the part object "samurai helmet" as the element of the model object may be reflected in the color of the drop samurai helmet.

The destruction target part object may be replaced by another part object. For example, the part object data of the part object disposed in the slot may be changed from "top hat" to "worn top hat" to update the slot state data.

In this embodiment, the model object may be changed when the part object destruction condition has been satisfied. For example, a model object A that wears a hat and a shoulder pad and a model object B that wears a T-shirt but does not wear a hat and a shoulder pad are provided, and the model object is changed from the model object A to the model object B when the part object destruction condition has been satisfied.

Although only some embodiments of this invention have been described in detail above, those skilled in the art will readily appreciate that many modifications are possible in the embodiments without materially departing from the novel teachings and advantages of this invention. Accordingly, all such modifications are intended to be included within the scope of the invention.

**Claims**

1. An image generation device comprising:

   a storage section that stores a plurality of part objects that form a model object;
   a hit determination section that determines whether or not an object has hit the model object; and
   a hit effect processing section that performs a hit effect process under a predetermined condition when the hit determination section has determined that the object has hit the model object,
   the storage section storing a plurality of items of attribute information respectively associated with the plurality of part objects; and
   the hit effect processing section performing the hit effect process based on the attribute information of a part object among the plurality of part objects that corresponds to a hit position of the model object.

2. The image generation device as defined in claim 1, wherein the storage section stores a plurality of items of material information as the attribute information respectively associated with the plurality of part objects; and
   wherein the hit effect processing section selects an effect object from a plurality of effect objects based on the material information of the part object corresponding to the hit position of the model object, and performs the hit effect process using the selected effect object.

3. The image generation device as defined in claim 1 or 2, wherein the storage section stores a plurality of items of color information as the attribute information respectively associated with the plurality of part objects; and
   wherein the hit effect processing section determines a color of an effect object based on the color information of the part object corresponding to the hit position of the model object, and performs the hit effect process using an effect object of the determined color.

4. The image generation device as defined in claim 3, wherein the storage section stores the color information that includes color arrangement information of the part object; and
   wherein the hit effect processing section determines the color of the effect object and the number of effect objects of the determined color based on the color arrangement information of the part object corresponding to the hit position of the model object.

5. The image generation device as defined in any one of claims 1 to 4, wherein the hit effect processing section determines the number of effect objects based on a size of the part object corresponding to the hit position of the model object.

6. The image generation device as defined in any one of claims 1 to 5, wherein, when two or more part objects among the plurality of part objects are associated with the hit position of the model object, the hit effect processing section performs the hit effect process on each of the two or more part objects based on the attribute information of each of the two or more part objects.

**7.** An image generation method comprising:

storing a plurality of part objects that form a model object in a storage section; determining whether or not an object has hit the model object;
performing a hit effect process under a predetermined condition when the model object has been determined to have been hit by the object;
storing a plurality of items of attribute information respectively associated with the plurality of part objects; and
performing the hit effect process based on the attribute information of a part object among the plurality of part objects that corresponds to a hit position of the model object.

FIG. 1

PROCESSING ⌐100

| OBJECT SPACE SETTING ⌐110 | HIT EFFECT PROCESSING ⌐119 |

MOVEMENT/MOTION PROCESSING ⌐111

VIRTUAL CAMERA CONTROL ⌐112

RECEPTION ⌐113

SETTING ⌐114

SLOT STATE UPDATE ⌐115

MODEL OBJECT DATA UPDATE ⌐116

GAME CALCULATION ⌐117

HIT DETERMINATION ⌐118

DRAWING ⌐120

GEOMETRIC PROCESSING ⌐122

SHADING PROCESSING ⌐124

ALPHA BLENDING ⌐126

HIDDEN SURFACE REMOVAL ⌐128

SOUND GENERATION ⌐130

STORAGE ⌐170

MAIN STORAGE ⌐171

IMAGE BUFFER ⌐173

Z-BUFFER ⌐175

SLOT STATE DATA STORAGE ⌐177

OBJECT DATA STORAGE ⌐179

MODEL OBJECT DATA STORAGE ⌐179a

PART OBJECT DATA STORAGE ⌐179b

OPERATION ⌐160

INFORMATION STORAGE MEDIUM ⌐180

DISPLAY ⌐190

SOUND OUTPUT ⌐192

COMMUNICATION ⌐196

EP 2 149 394 A1

FIG. 2

FIG. 3

# FIG. 4

| CATEGORY | PRIORITY INFORMATION | PART OBJECT | DESIGNATION INFORMATION | SLOT | (SLOT-UNIT) PART OBJECT DATA |
|---|---|---|---|---|---|
| Head | 5 | SAMURAI HELMET | NULL | A1 | Head_A1_1 |
| | | TOP HAT | NULL | A1 | Head_A1_2 |
| | | BURGONET | MASK | A1 | Head_A1_3 |
| | | ⋮ | ⋮ | ⋮ | ⋮ |
| Mask | 4 | VENETIAN MASK | Head, Neck | A2 | Mask_A2_1 |
| | | SHEET MASK | Neck | A2 | Mask_A2_2 |
| | | ⋮ | ⋮ | ⋮ | ⋮ |
| Neck | 13 | CLOAK | Head, Mask | A3 | Neck_A3_1 |
| | | ⋮ | ⋮ | ⋮ | ⋮ |
| Inner | 9 | T-SHIRT | NULL | A3 | Inner_A3_1 |
| | | | | A4 | Inner_A4_1 |
| | | | | A8 | Inner_A8_1 |
| | | | | A9 | Inner_A9_1 |
| | | ⋮ | ⋮ | ⋮ | ⋮ |

EP 2 149 394 A1

# FIG. 5

ALL

Head

Mask

Neck

Shoulder

Inner

Upper

Arm

Head

**SAMURAI HELMET**

POWER SKILL    10

IMPACT SKILL    20

**BURGONET**

POWER SKILL    20

IMPACT SKILL    25

**TOP HAT**

POWER SKILL    5

IMPACT SKILL    5

## FIG. 6

# FIG. 7

| | | |
|---|---|---|
| BODY FORM | | PHYSIQUE: +18    MUSCLE: +50 |
| VOICE | | FEMALE VOICE 6   PITCH: -15 |
| HAIRSTYLE | | GEOMETRIC SHORT |
| FACE | | FEMALE FACE 2 |
| HAIR COLOR (Hair_C1) | | |
| EYEBROW/ BEARD COLOR (Hair_C2) | | |
| EYE COLOR (Eye_C1) | | |
| SKIN COLOR (Skin_C1) | | |

## FIG. 8

TOP HAT

Head_C1

Head_C2

SHOULDER PAD

Shoulder_C1

Shoulder_C2

T-SHIRT

Inner_C1

Inner_C2

TROUSERS

Lower_C1

SHOES

Lower_C2

Feet_C1

Feet_C2

FIG. 9

| PART<br>(HIT AREA) | CATEGORY | PART OBJECT | FIRST<br>COLOR C1<br>(COLOR CODE) | SECOND<br>COLOR C2<br>(COLOR CODE) | COLOR RATIO<br>(1ST COLOR:<br>2ND COLOR) | SIZE OF<br>PART OBJECT | MATERIAL |
|---|---|---|---|---|---|---|---|
| UPPER<br>PART | Head | TOP HAT | Head_C1<br>(FF0000) | Head_C2<br>(00D535) | 6 : 4 | 200 | CLOTH |
| | Shoulder | SHOULDER PAD | Shoulder_C1<br>(FF2B2B) | Shoulder_C2<br>(00EA3A) | 5 : 3 | 80 × 2 | STEEL |
| MIDDLE<br>PART | Inner | T~SHIRT | Inner_C1<br>(003AEA) | Inner_C2<br>(009525) | 8 : 2 | 300 | CLOTH |
| LOWER<br>PART | Lower | TROUSERS | Lower_C1<br>(00B6EA) | Lower_C2<br>(00FF40) | 9 : 1 | 500 | CLOTH |
| | Feet | SHOES | Feet_C1<br>(D50035) | Feet_C2<br>(00BF30) | 6 : 4 | 40 × 2 | CLOTH |

EP 2 149 394 A1

FIG. 10A

FIG. 10B

# FIG. 10C

EOB1(EOB_cloth, COLOR:Head_C1)

EOB1(EOB_cloth, COLOR:Head_C2)

EOB2(EOB_steel, COLOR:Shoulder_C1)

EOB2(EOB_steel, COLOR:Shoulder_C2)

T-SHIRT

EP 2 149 394 A1

FIG. 11A

EOB_cloth

FIG. 11B

EOB_steel

# FIG. 12

```
                    ┌─────────────┐
                    │    START    │
                    └──────┬──────┘
                           │
                           ▼
                          ╱╲
                        ╱    ╲        ⌐S10
                      ╱  HIT?  ╲─────────── N ──┐
                      ╲        ╱                │
                        ╲    ╱                  │
                          ╲╱                    │
                           │ Y                  │
                           ▼                    │
                          ╱╲                    │
                        ╱    ╲      ⌐S20         │
                      ╱  IS PRED-  ╲             │
                     ╱ ETERMINED    ╲── N ──┐    │
                     ╲ CONDITION    ╱       │    │
                      ╲ SATISFIED? ╱        │    │
                        ╲        ╱          │    │
                          ╲╱  Y             │    │
                           │                │    │
                           ▼    ⌐S30        │    │
        ┌──────────────────────────────┐   │    │
        │  SELECTS EFFECT OBJECT BASED  │   │    │
        │ ON MATERIAL INFORMATION OF    │   │    │
        │ PART OBJECT CORRESPONDING TO  │   │    │
        │        SPECIFIED PART         │   │    │
        └───────────────┬──────────────┘   │    │
                        │     ⌐S40          │    │
        ┌───────────────────────────────┐  │    │
        │ DETERMINES THE NUMBER OF       │  │    │
        │ EFFECT OBJECTS BASED ON SIZE   │  │    │
        │ OF PART OBJECT CORRESPONDING   │  │    │
        │         TO SPECIFIED PART      │  │    │
        └───────────────┬───────────────┘  │    │
                        │     ⌐S50          │    │
        ┌───────────────────────────────┐  │    │
        │ DETERMINES COLOR OF EFFECT     │  │    │
        │ OBJECT AND THE NUMBER OF       │  │    │
        │ EFFECT OBJECTS CORRESPONDING   │  │    │
        │ TO THE COLOR BASED ON COLOR    │  │    │
        │ AND COLOR ARRANGEMENT RATIO OF │  │    │
        │ PART OBJECT CORRESPONDING TO   │  │    │
        │      PREDETERMINED PART        │  │    │
        └───────────────┬───────────────┘  │    │
                        │◄─────────────────┘    │
                        │     ⌐S60               │
        ┌───────────────────────────────┐       │
        │  PERFORMS HIT EFFECT PROCESS   │       │
        │  USING DETERMINED EFFECT       │       │
        │         OBJECTS                │       │
        └───────────────┬───────────────┘       │
                        │                        │
                        ▼                        │
                 ┌─────────────┐                 │
                 │     END     │                 │
                 └─────────────┘                 │
```

HIT? — S10 — N

IS PREDETERMINED CONDITION SATISFIED? — S20 — N

SELECTS EFFECT OBJECT BASED ON MATERIAL INFORMATION OF PART OBJECT CORRESPONDING TO SPECIFIED PART — S30

DETERMINES THE NUMBER OF EFFECT OBJECTS BASED ON SIZE OF PART OBJECT CORRESPONDING TO SPECIFIED PART — S40

DETERMINES COLOR OF EFFECT OBJECT AND THE NUMBER OF EFFECT OBJECTS CORRESPONDING TO THE COLOR BASED ON COLOR AND COLOR ARRANGEMENT RATIO OF PART OBJECT CORRESPONDING TO PREDETERMINED PART — S50

PERFORMS HIT EFFECT PROCESS USING DETERMINED EFFECT OBJECTS — S60

Europäisches
Patentamt
European
Patent Office
Office européen
des brevets

## EUROPEAN SEARCH REPORT

Application Number

EP 09 16 6560

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2001/027129 A1 (HARIMA HAJIME [JP])<br>4 October 2001 (2001-10-04)<br><br>* paragraph [0013] *<br>* paragraph [0067] - paragraph [0069] *<br>* paragraph [0088] - paragraph [0090] *<br>* paragraph [0145] *<br>----- | 1,3-7<br><br>2 | INV.<br>A63F13/10 |
| Y | US 2006/217008 A1 (HIGASHINO TAICHI [JP]<br>ET AL) 28 September 2006 (2006-09-28)<br>* figure 3 *<br>* claim 1 *<br>----- | 2 | |
| X | US 6 210 273 B1 (MATSUNO YASUMI [JP])<br>3 April 2001 (2001-04-03)<br>* figures 10,14,15 *<br>* column 13, line 49 - line 61 *<br>----- | 1,7 | |
| | | | TECHNICAL FIELDS SEARCHED (IPC)<br><br>A63F |

The present search report has been drawn up for all claims

| Place of search | Date of completion of the search | Examiner |
|---|---|---|
| The Hague | 17 November 2009 | Sindic, Gilles |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 16 6560

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2009

| Patent document cited in search report | | Publication date | Patent family member(s) | | Publication date |
|---|---|---|---|---|---|
| US 2001027129 | A1 | 04-10-2001 | JP<br>JP | 3822776 B2<br>2001276418 A | 20-09-2006<br>09-10-2001 |
| US 2006217008 | A1 | 28-09-2006 | JP | 2006268406 A | 05-10-2006 |
| US 6210273 | B1 | 03-04-2001 | JP<br>JP | 3249492 B2<br>2001009164 A | 21-01-2002<br>16-01-2001 |

EPO FORM P0459

For more details about this annex : see Official Journal of the European Patent Office, No. 12/82

**EP 2 149 394 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006268406 A